(19) Europäisches Patentamt
European Patent Office
Office européen des brevets

(11) **EP 1 826 974 B1**

(12) **FASCICULE DE BREVET EUROPEEN**

(45) Date de publication et mention
de la délivrance du brevet:
**01.10.2008 Bulletin 2008/40**

(51) Int Cl.:
*H04L 25/02* (2006.01)    *H04L 27/26* (2006.01)

(21) Numéro de dépôt: **07103093.6**

(22) Date de dépôt: **27.02.2007**

(54) **Procédé et dispositif d'estimation de la fonction de transfert du canal de transmission pour démodulateur COFDM**

Verfahren und Gerät zur Schätzung der Kanalübertragungsfunktion für einen COFDM Demodulator

Method and device to estimate the channel transfer function for a COFDM demodulator

(84) Etats contractants désignés:
**DE FR GB IT**

(30) Priorité: **27.02.2006 FR 0650663**

(43) Date de publication de la demande:
**29.08.2007 Bulletin 2007/35**

(73) Titulaire: **STMicroelectronics SA**
**92120 Montrouge (FR)**

(72) Inventeurs:
• **Isson, Olivier**
**38340, Voreppe (FR)**
• **Aourik, Fatima**
**92400 Courbevoie (FR)**
• **Belveze, Fabrice**
**38120 Fontanil Cornillon (FR)**

(74) Mandataire: **de Beaumont, Michel**
**Cabinet Beaumont**
**1, rue Champollion**
**38000 Grenoble (FR)**

(56) Documents cités:
**EP-A- 1 154 602        EP-A- 1 313 242**
**WO-A-20/05081481        US-A1- 2004 184 399**

• **HARADA Y ET AL: "An implementation of OFDM receiver for digital terrestrial television broadcasting and its technologies" BROADCASTING CONVENTION, 1997. IBS 97., INTERNATIONAL (CONF. PUBL. 447) AMSTERDAM, NETHERLANDS 12-16 SEPT. 1997, LONDON, UK,IEE, UK, 12 septembre 1997 (1997-09-12), pages 337-342, XP006508780 ISBN: 0-85296-694-6**

EP 1 826 974 B1

**Description**

<u>Domaine de l'invention</u>

La présente invention concerne un procédé et un dispositif d'estimation de la fonction de transfert du canal de transmission pour un démodulateur dit COFDM ("Coded Orthogonal Frequency Division Multiplex" ou multiplexage par division de fréquence orthogonale codée).

<u>Exposé de l'art antérieur</u>

Une modulation COFDM peut, par exemple, être mise en oeuvre pour la transmission hertzienne de données vidéo numériques selon le standard DVB (acronyme anglais pour Digital Video Broadcasting). Un tel standard prévoit également la transmission hertzienne de données vidéo numériques vers des récepteurs mobiles (standard DVB-H).

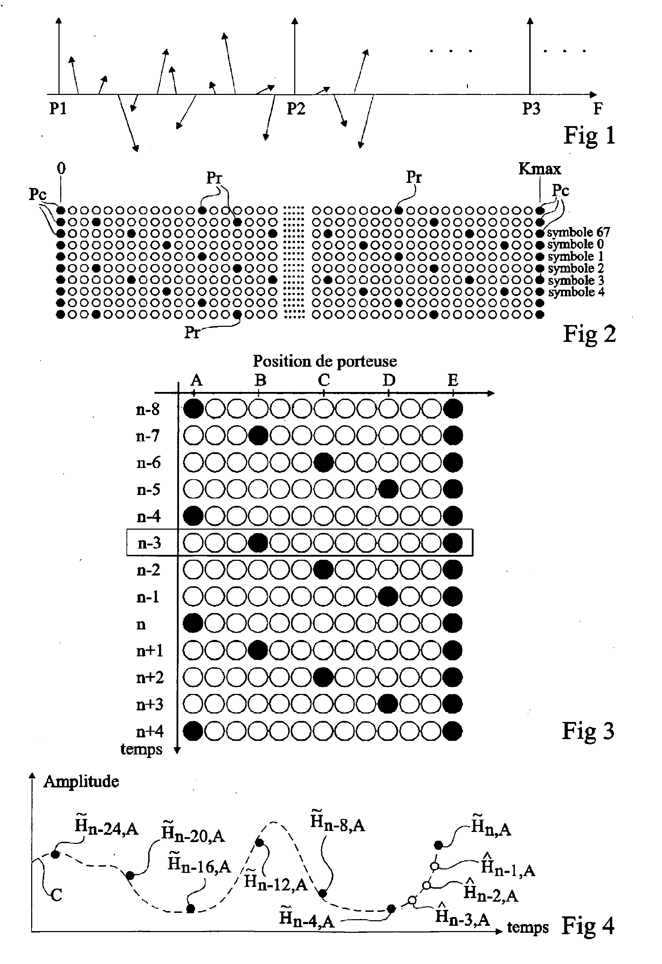

La figure 1 est destinée à illustrer le principe d'une modulation COFDM. Des paquets de données à émettre sont mis sous la forme de N coefficients complexes associés à N fréquences (ou porteuses) respectives. Le nombre N des fréquences est égal par exemple à 1705 pour le mode dit "2K" et à 6817 pour le mode dit "8K", en transmission herzienne de télévision numérique. Chaque coefficient complexe correspond à un vecteur qui est illustré en figure 1 comme partant d'un axe des fréquences en un point indiquant la fréquence associée au coefficient.

L'ensemble de ces N coefficients est traité par transformée de Fourier rapide inverse (IFFT), ce qui produit un "symbole" constitué d'une somme de porteuses modulées, chaque porteuse ayant une amplitude et une phase déterminées par le coefficient complexe associé. Le symbole ainsi généré est émis.

De manière classique, en transmission herzienne, la largeur du canal d'émission est de 6, 7 ou 8 MHz et chaque porteuse est séparée de la suivante par un écart de fréquence $\Delta f = 1/Tu$. Tu est la durée d'émission d'un symbole et est appelée durée utile. La durée utile est de l'ordre de 224 $\mu$s en mode 2K et 896 $\mu$s en mode 8K, pour une bande passante de 8MHz.

A la réception, un récepteur fait subir au symbole le traitement inverse, c'est-à-dire principalement une transformée de Fourier rapide (FFT) pour reconstituer les coefficients complexes de départ.

Comme cela est représenté en figure 1, certains vecteurs P1, P2, P3... régulièrement répartis ont une valeur constante connue. Ces vecteurs, ou les porteuses correspondantes, sont appelés pilotes. Ils servent à refléter les distorsions subies par le signal transmis et par l'information qu'ils donnent sur la réponse du canal de transmission, ils permettent de corriger les vecteurs inconnus situés entre les pilotes.

La figure 2 représente schématiquement la place de pilotes dans les symboles. Les symboles sont groupés en trames de 68 symboles, de façon classique en transmission hertzienne de télévision numérique (norme ETSI EN 300 744, V1.4.1). En figure 2, chaque ligne représente un symbole et chaque case représente la position d'une porteuse. Les porteuses sont définies comme allant d'une position 0 à une position N-1.

Les pilotes, représentés par des disques noirs, sont de deux types. D'une part, il y a, dans chaque symbole, des pilotes continus Pc. Les pilotes continus correspondent à des fréquences particulières réparties dans le canal. Dans la norme ETSI évoquée ci-dessus, il y a en 45 en mode 2K et 177 en mode 8K. Les pilotes continus sont présents dans tous les symboles et occupent toujours la même position en fréquence. En figure 2, seuls les pilotes continus correspondants aux positions 0 et N-1 ont été représentés. D'autre part, il y a, dans chaque symbole, des pilotes Pr dits "répartis" ("scattered pilots" en anglais), qui sont disposés toutes les 12 porteuses, et décalés de trois positions entre deux symboles successifs. Ainsi, tous les quatre symboles, on retrouve la même disposition des pilotes répartis Pr. Les autres porteuses, représentées par des disques blancs, véhiculent le signal utile proprement dit et sont appelées par la suite porteuses utiles. Comme cela apparaît en figure 2, pour des premières positions en fréquence, les porteuses associées correspondent toujours à des porteuses utiles quel que soit le symbole considéré, tandis que pour des secondes positions en fréquence, les porteuses associées correspondent à des porteuses utiles ou à des pilotes répartis selon le symbole considéré. Les premières positions sont appelées par la suite positions de porteuses utiles. Les secondes positions sont appelées par la suite positions de pilotes répartis.

Lors de la transmission de symboles, chaque symbole est précédé d'un intervalle de garde qui est généralement une recopie d'une partie de la fin du symbole correspondant. Les intervalles de garde sont souvent définis par une fraction de la durée utile Tu. Des valeurs classiques de l'intervalle de garde sont Tu/32, Tu/16, Tu/8 ou Tu/4. Les intervalles de garde servent à éviter des distorsions de modulation inter-symboles provoquées par un écho lors de la transmission.

Si la réponse impulsionnelle du canal est inférieure à la longueur de l'intervalle de garde et si le canal n'évolue pas ou peu pendant la transmission d'un symbole, on peut considérer que le canal de transmission est équivalent à N canaux multiplicatifs parallèles. De ce fait, si on appelle $X_{n,k}$ le coefficient complexe associé à la porteuse de position k du symbole d'indice n et $Y_{n,k}$ le coefficient complexe obtenu après l'application de la transformée de Fourrier rapide au symbole reçu, on peut alors écrire :

$$Y_{n,k} = H_{n,k}X_{n,k} + B_{n,k} \qquad \text{Equation (1)}$$

où $H_{n,k}$ est la fonction de transfert du canal de transmission pour la porteuse de position k du symbole d'indice n, et $B_{n,k}$ est le bruit dû au canal de transmission. Chaque coefficient complexe émis est donc multiplié par la fonction de transfert du canal correspondante qui dépend seulement du symbole et de la porteuse considérés.

Au niveau du récepteur, on réalise une estimation du coefficient complexe émis associé à chaque porteuse. Notons $\hat{X}_{n,k}$ l'estimation du coefficient $X_{n,k}$. Pour déterminer $\hat{X}_{n,k}$, il est tout d'abord nécessaire d'estimer la fonction de transfert $H_{n,k}$ du canal pour la porteuse de position k du symbole d'indice n. On appelle $\hat{H}_{n,k}$ l'estimation de la fonction de transfert $H_{n,k}$ du canal de transmission pour la porteuse de position k du symbole d'indice n, ou estimation de canal de la porteuse de position k du symbole d'indice n. On détermine alors l'estimation $\hat{X}_{n,k}$ de la façon suivante :

$$\hat{X}_{n,k} = \mathfrak{I}(\hat{H}_{n,k})Y_{n,k} \qquad \text{Equation (2)}$$

où $\mathfrak{I}$ est une fonction, par exemple la fonction inverse, l'équation (2) correspondant alors à l'équation suivante :

$$\hat{X}_{n,k} = \frac{Y_{n,k}}{\hat{H}_{n,k}} = \frac{H_{n,k}}{\hat{H}_{n,k}}X_{n,k} + \frac{B_{n,k}}{\hat{H}_{n,k}} \qquad \text{Equation (3)}$$

Il est donc nécessaire de déterminer une estimation du canal $\hat{H}_{n,k}$ la plus juste possible. Pour un pilote, une façon simple de déterminer l'estimation de canal consiste à diviser le coefficient complexe reçu par le coefficient complexe émis. En effet, le coefficient complexe émis est connu pour les pilotes. Une telle estimation, appelée $\hat{H}_{n,k}$, est obtenue de la façon suivante :

$$\tilde{H}_{n,k} = \frac{Y_{n,k}}{X_{n,k}} = H_{n,k} + \frac{B_{n,k}}{X_{n,k}} \qquad \text{Equation (4)}$$

Une telle estimation de canal est appelée estimation de canal bruitée car elle comporte généralement une composante de bruit importante.

Après avoir déterminé, pour un symbole donné, les estimations de canal bruitées des pilotes continus et répartis, il est nécessaire de déterminer les estimations de canal des autres porteuses du symbole qui ne correspondent pas à des pilotes continus ou répartis, c'est-à-dire les porteuses utiles.

Si la fonction de transfert du canal ne variait sensiblement pas en fonction de la fréquence, les estimations de canal des porteuses utiles d'un symbole pourraient être déterminées en réalisant la moyenne des estimations de canal bruitées des pilotes du symbole. Toutefois, de façon générale, la fonction de transfert du canal varie en fonction de la fréquence et du temps et un procédé adapté de détermination des estimations de canal des porteuses utiles doit être mis en oeuvre. Un exemple de procédé consiste à utiliser un filtre de Wiener à deux dimensions. Dans ce cas, l'estimation de canal d'une porteuse utile d'un symbole donné correspond à une combinaison des estimations de canal de porteuses du même symbole et de plusieurs symboles voisins du symbole considéré.

Un tel procédé est complexe à mettre en oeuvre. Un procédé plus simple consiste à séparer l'opération de filtrage à deux dimensions en deux opérations de filtrage à une dimension, une première opération de filtrage réalisée, pour une position de porteuse donnée, sur plusieurs symboles, et une seconde opération de filtrage réalisée, pour un symbole donné, sur plusieurs porteuses du symbole.

Plus précisément, le procédé de détermination des estimations de canal des porteuses d'un symbole donné comprend alors les deux étapes successives suivantes:

(a) une étape d'interpolation temporelle qui consiste, pour chaque porteuse utile du symbole donné à une position de pilote réparti, à déterminer l'estimation de canal de la porteuse par interpolation à partir des estimations de canal bruitées de pilotes répartis d'autres symboles à la même position en fréquence ; et

(b) une étape d'interpolation fréquentielle qui consiste, pour le symbole donné, et pour chaque porteuse utile à une position de porteuse utile, à déterminer l'estimation de canal de la porteuse par interpolation à partir des estimations de canal des porteuses du symbole déterminées à l'étape précédente.

Les estimations de canal bruitées des pilotes continus et répartis du symbole donné sont généralement déterminées au fur et à mesure du traitement du symbole donné à l'étape (a).

Un procédé d'interpolation temporelle est donc mis en oeuvre à l'étape (a), pour un symbole donné, réalisée indépendamment pour chaque position de porteuse en fréquence. Pour le symbole en cours de décodage ou symbole courant, le procédé d'interpolation temporelle consiste à réaliser une combinaison linéaire d'estimations de canal bruitées de porteuses à la même position en fréquence de plusieurs symboles reçus avant le symbole courant, ou symboles passés, et d'un ou de plusieurs symboles reçus après le symbole courant, ou symboles futurs.

La figure 3 est une vue de détail d'une partie de la figure 2. On appelle A, B, C, D, des positions successives en fréquence de pilotes répartis et E la position d'un pilote continu. Pour un procédé d'interpolation temporelle pour lequel la détermination de l'estimation de canal d'un pilote utile à une position de pilote réparti utilise une seule estimation de canal bruitée d'un symbole futur, la détermination des estimations de canal de toutes les porteuses utiles à des positions de pilotes répartis d'un symbole courant donné nécessite au moins que les trois symboles futurs suivants soient connus. En d'autres termes, si le dernier symbole reçu par le démodulateur est le symbole d'indice n, le procédé d'interpolation temporelle est mis en oeuvre pour le symbole d'indice n-3 lorsqu'une seule estimation de canal bruitée d'un symbole futur est utilisée, et, de façon plus générale, le symbole d'indice n-4s+1, où s est un entier, lorsque les estimations bruitées de s symboles futurs sont utilisées.

Un tel procédé d'interpolation temporelle est mis en oeuvre de la façon suivante:

pour la porteuse à la position E qui correspond à un pilote continu et pour la porteuse à la position B qui correspond à un pilote réparti, l'estimation de canal est, par exemple, égale à l'estimation de canal bruitée ou peut correspondre au résultat d'un filtrage temporel d'estimations de canal bruitée de pilotes continus ou répartis ; et
pour les porteuses utiles aux positions A, C et D, l'estimation de canal est déterminée à partir de l'estimation de canal bruitée d'un pilote réparti d'un symbole futur (c'est-à-dire pour les positions A, C et D, de l'estimation de canal bruitée de même position correspondant respectivement au symbole d'indice n, n-2 et n-1) et des estimations de canal bruitées de pilotes répartis de même position de symboles passés.

On appelle $\mathbf{U_{n,k}}$ un vecteur complexe de dimension M+1, dont chaque composante correspond à une estimation de canal bruitée. Le vecteur $\mathbf{U_{n,k}}$ est donné, pour une porteuse correspondant à un pilote du symbole d'indice n à la position k, par la relation suivante:

$$U_{n,k} = \begin{bmatrix} \widetilde{H}_{n-4M,k} \\ \widetilde{H}_{n-4(M-1),k} \\ \vdots \\ \widetilde{H}_{n-4,k} \\ \widetilde{H}_{n,k} \end{bmatrix} \qquad\qquad \text{Equation (5)}$$

où M est un entier, par exemple égal à 5.

De façon classique, les estimations de canal $\hat{H}_{n-1,k}$, $\hat{H}_{n-2,k}$ et $\hat{H}_{n-3,k}$ de pilotes utiles sont obtenues par combinaison linéaire des composantes du vecteur $\mathbf{U_{n,k}}$ et sont données par les équations suivantes:

$$\hat{H}_{n-1,k} = \theta_1^T U_{n,k} \qquad\qquad \text{Equation (6)}$$

$$\hat{H}_{n-2,k} = \theta_2^T U_{n,k} \qquad\qquad \text{Equation (7)}$$

$$\hat{H}_{n-3,k} = \theta_3^T U_{n,k} \qquad\qquad \text{Equation (8)}$$

où $\theta_1$, $\theta_2$ et $\theta_3$ sont des vecteurs à coefficients complexes de dimension M+1, appelés par la suite filtres d'interpolation,

et où $\theta_i^T$, i étant un entier compris entre 1 et 3, correspond à la transposée de $\theta_i$.

La figure 4 représente une courbe d'évolution *C* en traits pointillés de l'amplitude de la fonction de transfert du canal de transmission pour la position en fréquence A. Les disques noirs $\widetilde{H}_{n-24,A}$, $\widetilde{H}_{n-20,A}$, $\widetilde{H}_{n-16,A}$, $\widetilde{H}_{n-12,A}$, $\widetilde{H}_{n-8,A}$, $\widetilde{H}_{n-4,A}$ et $\widetilde{H}_{n,A}$ correspondent aux estimations de canal bruitées de pilotes répartis qui ont été obtenues, par exemple, à partir de l'équation (4). Les disques blancs $\hat{H}_{n-1,A}$, $\hat{H}_{n-2,A}$ et $\hat{H}_{n-3,A}$ correspondent aux estimations de canal de pilotes utiles qui sont à déterminer. Chaque estimation de canal $\hat{H}_{n-1,A}$, $\hat{H}_{n-2,A}$ et $\hat{H}_{n-3,A}$ est alors égale à une combinaison linéaire spécifique des six estimations de canal bruitées $\widetilde{H}_{n-20,A}$, $\widetilde{H}_{n-16,A}$, $\widetilde{H}_{n-12,A}$, $\widetilde{H}_{n-8,A}$, $\widetilde{H}_{n-4,A}$ et $\widetilde{H}_{n,A}$.

En théorie, les propriétés statistiques du canal de transmission sont sensiblement indépendantes de la fréquence. Ceci signifie que même si l'amplitude de la fonction de transfert du canal peut être différente pour chaque porteuse d'un symbole donné, la valeur absolue du taux de variation de la fonction de transfert est indépendante de la fréquence. Pour un symbole donné, les filtres d'interpolation $\theta_1$, $\theta_2$, $\theta_3$ ne dépendent donc pas de la position en fréquence des porteuses. Les filtres d'interpolation peuvent être déterminés seulement pour les pilotes continus et être utilisés pour la détermination des estimations de canal des autres porteuses du symbole. Par contre, les propriétés statistiques du canal de transmission peuvent varier dans le temps, en particulier lorsque le récepteur est mobile. I1 est donc nécessaire de déterminer de nouvelles valeurs des filtres d'interpolation $\theta_1$, $\theta_2$ et $\theta_3$, par exemple, pour chaque symbole.

Les filtres d'interpolation $\theta_1$, $\theta_2$, $\theta_3$ peuvent être déterminés par un procédé itératif. De ce fait, si on attribue le rang p à la dernière valeur déterminée du filtre $\theta_i$, i étant compris entre 1 et 3, une nouvelle valeur du filtre $\theta_i$ correspond au rang p+1 et est fournie par la relation suivante:

$$\theta_i(p+1) = f(\theta_i(p)) \qquad \text{Equation (9)}$$

où f est une fonction d'itération. De nouvelles valeurs du filtre $\theta_i$ peuvent être déterminées lors de la mise en oeuvre du procédé d'interpolation temporelle pour chaque pilote continu d'un symbole, et ce, par exemple, pour chaque symbole.

Une contrainte de la mise en oeuvre d'un procédé itératif est que la fonction d'itération f doit permettre une convergence rapide de la valeur du filtre $\theta_i$.

Un inconvénient du procédé d'interpolation temporelle précédemment décrit qui effectue une combinaison linéaire d'estimations de canal bruitées passées et future est que la précision obtenue peut être insuffisante. Ceci peut être le cas lorsque l'amplitude de la fonction de transfert du canal de transmission varie de façon importante dans le temps, ce qui se produit, par exemple, lorsque le récepteur est mobile.

Résumé de l'invention

La présente invention vise à pallier tout ou partie des inconvénients des procédés de détermination d'estimations de la fonction de transfert du canal de transmission connus.

La présente invention vise plus particulièrement un procédé d'interpolation temporelle qui permet de déterminer des estimations de la fonction de transfert du canal de transmission avec une précision améliorée.

Selon un autre objet de la présente invention, la présente invention vise un procédé d'interpolation temporelle utilisant des filtres d'interpolation déterminés par un procédé itératif qui permet de faire converger rapidement les composantes des filtres d'interpolation vers des valeurs représentatives des propriétés du canal de transmission.

Pour atteindre tout ou partie de ces objets ainsi que d'autres, la présente invention prévoit un procédé de démodulation COFDM de symboles successifs d'un signal reçu depuis un canal de transmission, chaque symbole comportant des premières porteuses modulées en phase et/ou en amplitude véhiculant des données qui dépendent du symbole et des secondes porteuses de référence dites pilotes dont les positions en fréquence varient au moins en partie d'un symbole au symbole suivant, au moins une porteuse donnée des secondes porteuses correspondant, pour chaque symbole, au même pilote, le procédé comprenant, pour chaque symbole, une étape de détermination d'une première estimation de la fonction de transfert du canal pour chaque porteuse d'un ensemble de porteuses parmi les premières porteuses dudit symbole telles que, pour les positions en fréquence des porteuses considérées, des symboles différents dudit symbole comprennent des pilotes, correspondant à une combinaison linéaire de secondes estimations de la fonction de transfert du canal déterminées pour des pilotes à la fréquence de ladite porteuse. Les coefficients de la combinaison linéaire sont déterminés de façon itérative, une nouvelle valeur d'au moins un des coefficients étant égale à la somme de la dernière valeur déterminée dudit coefficient et d'un terme comprenant le produit entre un pas d'itération et un terme d'erreur égal à la différence entre la deuxième estimation déterminée pour ladite porteuse donnée d'un symbole qui dépend du coefficient et la première estimation déterminée pour ladite porteuse donnée dudit symbole, le pas d'itération étant déterminé de façon itérative.

Selon un exemple de réalisation de la présente invention, chaque seconde estimation déterminée pour une porteuse d'un symbole est égale au rapport entre un coefficient reçu associé à la porteuse et un coefficient théorique prédéterminé associé à la porteuse.

Selon un exemple de réalisation de la présente invention, la première estimation est déterminée à partir d'au moins la seconde estimation déterminée pour un pilote à la même fréquence que ladite porteuse d'un symbole reçu après ledit symbole.

Selon un exemple de réalisation de la présente invention, la nouvelle valeur du coefficient est égale à la somme de la dernière valeur déterminée dudit coefficient et d'un terme égal au produit du pas d'itération, du terme d'erreur et du conjugué de la seconde estimation déterminée pour la porteuse donnée d'un symbole qui dépend du coefficient.

Selon un exemple de réalisation de la présente invention, le procédé comprend les étapes, pour au moins la porteuse donnée de chaque symbole, consistant à déterminer un vecteur dont au moins certaines composantes correspondent à des secondes estimations déterminées pour la porteuse donnée de symboles reçus avant ledit symbole ; et à déterminer une nouvelle valeur du pas d'itération égale à la somme de la dernière valeur du pas d'itération déterminée et d'un terme égal au produit d'un terme constant et de la partie réelle du produit de la transposée du vecteur, d'une matrice de pondération et du conjugué du terme d'erreur.

La présente invention prévoit également un démodulateur COFDM destiné à recevoir des symboles successifs d'un signal reçu depuis un canal de transmission, chaque symbole comportant des premières porteuses modulées en phase et/ou en amplitude véhiculant des données qui dépendent du symbole et des secondes porteuses de référence dites pilotes dont les positions en fréquence varient au moins en partie d'un symbole au symbole suivant, au moins une porteuse donnée des secondes porteuses correspondant, pour chaque symbole, au même pilote, le démodulateur comprenant un circuit de détermination, pour chaque symbole, d'une première estimation de la fonction de transfert du canal pour chaque porteuse d'un ensemble de porteuses parmi les premières porteuses dudit symbole telles que, pour les positions en fréquence des porteuses considérées, des symboles différents dudit symbole comprennent des pilotes, correspondant à une combinaison linéaire de secondes estimations de la fonction de transfert du canal déterminées pour des pilotes à la fréquence de ladite porteuse. Le démodulateur comprend un circuit de détermination des coefficients de la combinaison linéaire de façon itérative, une nouvelle valeur d'au moins un des coefficients étant égale à la somme de la dernière valeur déterminée dudit coefficient et d'un terme comprenant le produit entre un pas d'itération et un terme d'erreur égal à la différence entre la deuxième estimation déterminée pour ladite porteuse donnée d'un symbole qui dépend du coefficient et la première estimation déterminée pour ladite porteuse donnée dudit symbole, le démodulateur comprenant en outre un circuit de détermination du pas d'itération de façon itérative.

Selon un exemple de réalisation de la présente invention, le démodulateur comprend un circuit adapté à fournir chaque seconde estimation pour une porteuse d'un symbole comme étant égale au rapport entre un coefficient reçu associé à la porteuse et un coefficient théorique prédéterminé associé à la porteuse.

Selon un exemple de réalisation de la présente invention, le circuit de détermination des coefficients de la combinaison linéaire est adapté à fournir la nouvelle valeur du coefficient comme étant égale à la somme de la dernière valeur déterminée dudit coefficient et d'un terme égal au produit du pas d'itération, du terme d'erreur et du conjugué de la seconde estimation déterminée pour la porteuse donnée d'un symbole qui dépend du coefficient.

Selon un exemple de réalisation de la présente invention, le circuit de détermination du pas d'itération comprend un circuit adapté, pour au moins la porteuse donnée de chaque symbole, à déterminer un vecteur dont au moins certaines composantes correspondent à des secondes estimations déterminées pour la porteuse donnée de symboles reçus avant ledit symbole ; et un circuit adapté à déterminer une nouvelle valeur du pas d'itération égale à la somme de la dernière valeur du pas d'itération déterminée et d'un terme égal au produit d'un terme constant et de la partie réelle du produit de la transposée du vecteur, d'une matrice de pondération et du conjugué du terme d'erreur.

Selon un exemple de réalisation de la présente invention, le circuit de détermination du pas d'itération comprend un circuit adapté à déterminer une nouvelle valeur de la matrice de pondération égale à la somme de la dernière valeur de la matrice de pondération déterminée, d'un premier terme égal au produit du terme d'erreur et du conjugué du vecteur et d'un second terme égal au produit de l'opposée du pas d'itération, du conjugué du vecteur, de la transposée du vecteur et de la dernière valeur de la matrice de pondération déterminée.

Brève description des dessins

Ces objets, caractéristiques et avantages, ainsi que d'autres de la présente invention seront exposés en détail dans la description suivante d'exemples de réalisation particuliers faite à titre non-limitatif en relation avec les figures jointes parmi lesquelles :

la figure 1, précédemment décrite, représente des porteuses modulées en phase et en amplitude dans un système de transmission COFDM ;
la figure 2, précédemment décrite, représente schématiquement la position de pilotes dans des symboles ;

les figures 3 et 4, précédemment décrites, illustrent le principe de détermination d'estimations de canal ;

la figure 5 représente un exemple de démodulateur COFDM selon la présente invention ;

la figure 6 illustre les étapes de détermination des filtres d'interpolation mises en oeuvre par un premier exemple de procédé d'interpolation temporelle selon l'invention ;

la figure 7 illustre les étapes du premier exemple de procédé d'interpolation temporelle selon l'invention ; et

la figure 8 illustre les étapes de détermination des filtres d'interpolation mises en oeuvre par un second exemple de procédé d'interpolation temporelle selon l'invention.

Description détaillée

Par souci de clarté, de mêmes éléments ont été désignés par de mêmes références aux différentes figures.

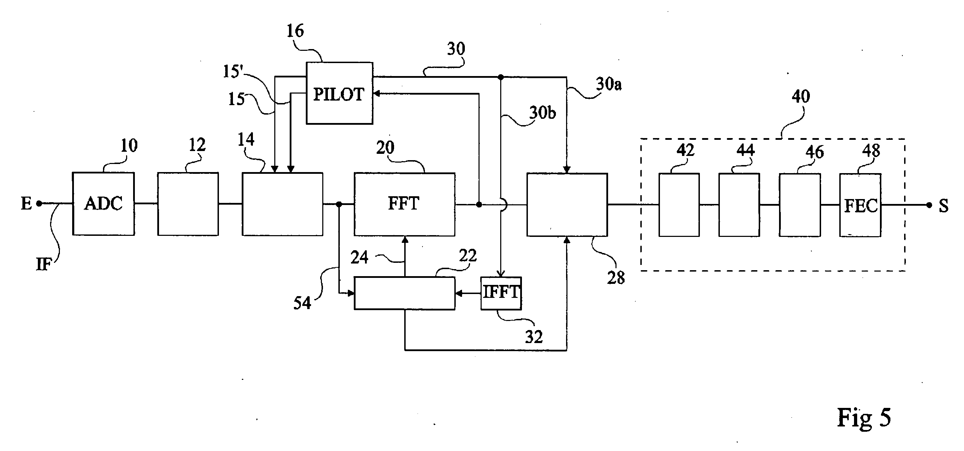

La figure 5 représente un exemple de démodulateur COFDM d'un récepteur selon la présente invention. Une entrée E du démodulateur reçoit un signal IF de fréquence intermédiaire permettant un échantillonnage, par exemple à 36 MHz. Le signal IF correspond au signal reçu après divers changements ou transpositions de fréquence.

L'entrée E est couplée à un convertisseur analogique-numérique 10 (ADC) qui numérise le signal d'entrée IF. Le convertisseur analogique-numérique 10 attaque un module 12 de changement de fréquence. Le module 12 fournit un signal sensiblement en bande de base, le spectre du signal en sortie du module 12 étant centré sur une fréquence sensiblement égale à zéro. Le module 12 est couplé à un module 14 permettant d'une part un réglage fin de la fréquence centrale du spectre du signal et, d'autre part, de fournir des échantillons temporels à des instants appropriés au traitement ultérieur. En sortie du module 14, le spectre du signal est centré sur une fréquence égale à 0 et le nombre et la position temporelle des échantillons sont adaptés à la transformation par transformée de Fourier qui a lieu dans le module suivant. Le module 14 est commandé par des liaisons 15 et 15' reliant le module 14 à un module 16 de traitement des pilotes continus et répartis.

La sortie du module 14 attaque un module 20 de transformée de Fourier rapide (FFT) qui fournit les fréquences correspondant à un symbole. Le module 20 est piloté par un module 22 qui fournit, par l'intermédiaire d'une liaison 24, un signal de réglage de la fenêtre d'analyse de la transformée de Fourier.

La sortie du module 20 est couplée au module 16 qui réalise l'extraction et le traitement des pilotes continus et répartis. Le module 16 fournit sur les liaisons 15 et 15' les signaux destinés à corriger la fréquence centrale du spectre et la fréquence d'échantillonnage du signal.

La sortie du module 20 attaque un module 28 dans lequel le signal est corrigé à l'aide d'une estimation de la réponse fréquentielle du canal, c'est-à-dire l'estimation de la fonction de transfert du canal. L'estimation de la fonction de transfert de canal est réalisée dans le module 16 à l'aide des pilotes. Cette estimation est fournie par le module 16 sur une liaison 30, dont une branche 30a est couplée au module 28. En sortie du module 28, le signal comprend les porteuses véhiculant les données.

L'estimation de la fonction de transfert du canal, fournie par le module 16, alimente, par l'intermédiaire de la liaison 30 et d'une branche 30b de la liaison 30, un module 32 de transformée de Fourier inverse (IFFT), pour déterminer la réponse impulsionnelle du canal. Le module 32 fournit la réponse impulsionnelle du canal au module 22, pour ajuster dynamiquement le positionnement de la fenêtre d'analyse FFT.

Le traitement des porteuses utiles est assuré dans un circuit 40 de traitement et de fourniture de données. Le circuit 40 a une structure classique et peut comporter, comme cela est représenté en figure 5, un module 42 de désentrelacement de symboles, un module 44 dit de "démappage", un module 46 de désentrelacement de bits, et un module 48 (FEC) de correction d'erreur. La sortie du module 48 constitue la sortie S du circuit 40 et du démodulateur et fournit des données correspondant aux données émises.

Pour chaque symbole, le procédé d'interpolation temporelle selon l'invention est mis en oeuvre par le module 16. Le procédé comporte des étapes de détermination de nouvelles valeurs des filtres d'interpolation $\theta_i$, i étant compris entre 1 et 3, chaque fois que la porteuse traitée par le module 16 correspond à un pilote continu.

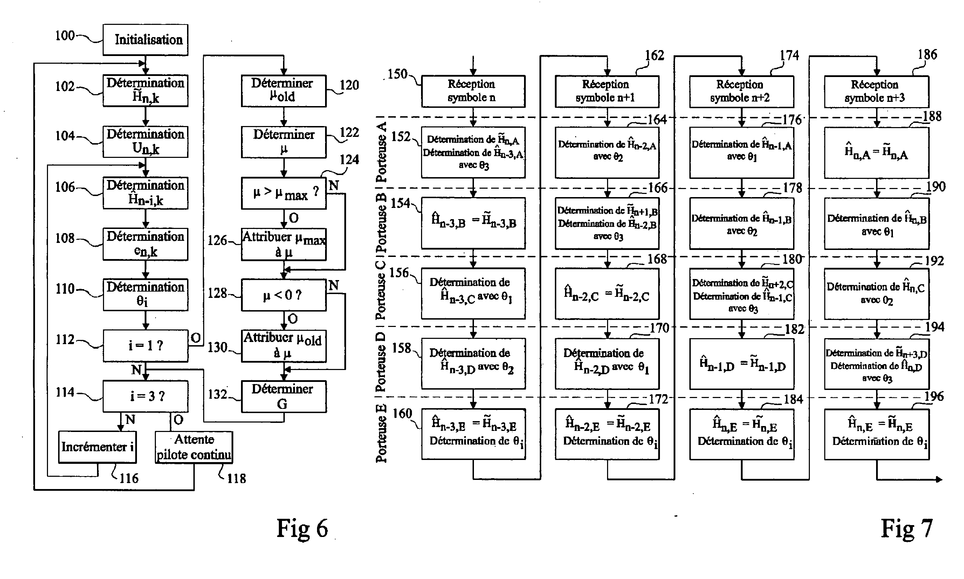

La figure 6 illustre les étapes de détermination des filtres d'interpolation $\theta_i(p)$, i étant compris entre 1 et 3, mises en oeuvre par un premier exemple de procédé d'interpolation temporelle selon l'invention.

A l'étape 100, on réalise une initialisation des vecteurs, matrices et paramètres utilisés par le procédé itératif. A titre d'exemple, chaque filtre $\theta_i(0)$, i étant compris entre 1 et 3, est initialisé de la façon suivante:

$$\theta_i(0) = (1/6, \ldots, 1/6)^T \qquad\qquad \text{Equation (10)}$$

Le procédé itératif utilise un vecteur G de dimension M+1 qui est modifié au cours du procédé en même temps que le filtre $\theta_1(p)$. L'indice temporel p est donc également utilisé pour le vecteur G. Le vecteur G est initialisé de la façon suivante:

$$G(0) = (0, \ldots, 0)^T \qquad\qquad \text{Equation (11)}$$

Le procédé utilise des paramètres scalaires $\mu_{max}$ et $\alpha$ qui sont respectivement mis, par exemple, à la valeur 0,2 et $\mu_{max}/300$. Le procédé utilise un paramètre scalaire $\mu$ qui est modifié au cours du procédé en même temps que le vecteur G. L'indice temporel p est donc également utilisé pour le paramètre p. Le paramètre $\mu$ est initialisé de la façon suivante:

$$\mu(0) = \mu_{max} \qquad\qquad \text{Equation (12)}$$

L'indice i est initialement mis à 1. Le procédé se poursuit à l'étape 102 lorsque le module 16 a reçu suffisamment de symboles pour déterminer le vecteur $\mathbf{U_{n,k}}$, au moins 4M+1 symboles dans le premier exemple de réalisation. Toutefois, le procédé peut également être mis en oeuvre lorsque moins de 4M+1 symboles sont reçus. Dans ce cas, le vecteur $\mathbf{U_{n,k}}$ peut être complété avec des valeurs initiales déterminées.

A l'étape 102, on détermine une estimation de canal bruitée $\tilde{\mathbf{H}}_{n,k}$ du pilote continu du symbole d'indice n à la position k à partir de l'équation (4). Le procédé se poursuit à l'étape 104.

A l'étape 104, on détermine le vecteur $\mathbf{U_{n,k}}$ à partir de l'équation (5). Le procédé se poursuit à l'étape 106.

A l'étape 106, on détermine l'estimation de canal $\hat{\mathbf{H}}_{n-ik}$ du pilote continu du symbole d'indice n-i à la position k à partir de l'une des équations (6), (7) ou (8) selon la valeur de l'indice i. Le procédé se poursuit à l'étape 108.

A l'étape 108, on détermine une erreur d'estimation $\mathbf{e_{n,k}}$ selon l'équation suivante :

$$e_{n,k} = \tilde{H}_{n-i,k} - \hat{H}_{n-i,k} \qquad\qquad \text{Equation (13)}$$

le vecteur $\tilde{H}_{n-i,k}$ ayant été déterminé à un cycle précédent du procédé itératif. Le procédé se poursuit à l'étape 110.

A l'étape 110, on détermine une nouvelle valeur $\theta_i(p+1)$ du filtre d'interpolation $\theta_i$ selon l'équation suivante :

$$\theta_i(p+1) = \theta_i(p) + \mu(p)U_{n,k}^H e_{n,k} \qquad\qquad \text{Equation (14)}$$

où $U_{n,k}^H$ correspond au conjugué transposé du vecteur $\mathbf{U_{n,k}}$. Le paramètre $\mu(p)$ correspond donc au pas du procédé itératif. Le procédé se poursuit à l'étape 112.

A l'étape 112, on détermine si l'indice i est égal à 1. Dans la négative, le procédé se poursuit à l'étape 114.

A l'étape 114, on détermine si l'indice i est égal à 3. Dans la négative, le procédé se poursuit à l'étape 116.

A l'étape 116, l'indice i est augmenté d'une unité et le procédé recommence à l'étape 106.

Si à l'étape 114, l'indice i est égal à 3, le procédé se poursuit à l'étape 118.

A l'étape 118, on attend le prochain pilote continu du symbole d'indice n ou le premier pilote continu du symbole d'indice n+1. L'indice i est mis à 1. Le procédé se poursuit à l'étape 102.

Si à l'étape 112, i est égal à 1, le procédé se poursuit à l'étape 120.

A l'étape 120, le paramètre $\mu_{old}$ est modifié de la façon suivante:

$$\mu_{old} = \mu(p) \qquad\qquad \text{Equation (15)}$$

Le procédé se poursuit à l'étape 122.

A l'étape 122, on détermine une nouvelle valeur $\mu(p+1)$ du paramètre $\mu$ selon la relation suivante :

$$\mu(p+1) = \mu(p) + \alpha\Re(U_{n,k}^T G(p)e_{n,k}^*) \qquad\qquad \text{Equation (16)}$$

où $e_{n,k}^{*}$ correspond au conjugué de $e_{n,k}$, $\Re(U_{n,k}^{T}G(p)e_{n,k}^{*})$ correspond à la partie réelle de $U_{n,k}^{T}G(p)e_{n,k}^{*}$ . Le procédé se poursuit à l'étape 124.

A l'étape 124, on compare $\mu(p+1)$ à $\mu_{max}$. Si $\mu(p+1)$ est supérieur à $\mu_{max}$, le procédé se poursuit à l'étape 126.

A l'étape 126, $\mu(p+1)$ est mis à $\mu_{max}$. Le procédé se poursuit à l'étape 128. Si à l'étape 124, $\mu(p+1)$ est inférieur à $\mu_{max}$, le procédé se poursuit à l'étape 128.

A l'étape 128, on détermine si $\mu(p+1)$ est inférieur à 0. Dans l'affirmative, le procédé se poursuit à l'étape 130.

A l'étape 130, $\mu(p+1)$ est mis à $\mu_{old}$. Le procédé se poursuit à l'étape 132.

Si à l'étape 128, $\mu(p+1)$ est supérieur à 0, le procédé se poursuit à l'étape 132.

A l'étape 132, on détermine une nouvelle valeur $G(p+1)$ du vecteur G de la façon suivante:

$$G(p+1) = G(p) - \mu(p+1)U_{n,k}^{*}U_{n,k}^{T}G(p) + U_{n,k}^{*}e_{n,k} \qquad \text{Equation (17)}$$

Le procédé se poursuit à l'étape 114.

Le fait de modifier, aux étapes 120 à 132, le pas $\mu$ utilisé pour la détermination des filtres d'interpolation $\theta_i$, i étant compris entre 1 et 3, permet de faire converger beaucoup plus rapidement le procédé de détermination des filtres d'interpolation $\theta_i$ que par un procédé dans lequel le pas $\mu$ serait fixe. Le procédé itératif selon l'invention est alors relativement peu sensible aux valeurs initiales utilisées pour les filtres d'interpolation $\theta_i$.

La figure 7 représente les étapes du premier exemple de procédé d'interpolation temporelle mise en oeuvre par le module 16. Le procédé va être décrit en relation à la figure 3.

On suppose que les symboles jusqu'au symbole d'indice n-1 ont déjà été reçus par le module 16.

A l'étape 150, le module 16 reçoit le symbole d'indice n et en extrait les pilotes continus et répartis. La détermination des estimations de canal va donc être réalisée pour le symbole d'indice n-3. On poursuit alors en considérant la porteuse à la position A à l'étape 152.

A l'étape 152, comme la porteuse à la position A du symbole d'indice n correspond à un pilote réparti, on détermine l'estimation de canal bruitée $\tilde{H}_{n,A}$ à partir de l'équation (4). La valeur $\tilde{H}_{n,A}$ est alors mémorisée. En outre, pour le symbole d'indice n-3, on détermine l'estimation de canal $\tilde{H}_{n-3,A}$ en utilisant $\theta_3$ selon la relation suivante qui se déduit de l'équation (8) :

$$\dot{H}_{n-3,A} = \theta_3^{T}U_{n,A} \qquad \text{Equation (18)}$$

On poursuit alors en considérant la porteuse à la position B à l'étape 154.

A l'étape 154, l'estimation de canal $\hat{H}_{n-3,B}$ de la porteuse à la position B est égale à l'estimation de canal bruité $\tilde{H}_{n-3,B}$ qui a été déterminée auparavant. On poursuit alors en considérant la porteuse à la position C à l'étape 156.

A l'étape 156, on détermine l'estimation de canal $\hat{H}_{n-3,C}$ en utilisant $\theta_1$ selon la relation suivante qui se déduit de l'équation (6) :

$$\hat{H}_{n-3,C} = \theta_1^{T}U_{n-2,C} \qquad \text{Equation (19)}$$

On poursuit alors en considérant la porteuse à la position D à l'étape 158.

A l'étape 158, on détermine l'estimation de canal $\hat{H}_{n-3,D}$ en utilisant $\theta_2$ selon la relation suivante qui se déduit de l'équation (7) :

$$\hat{H}_{n-3,D} = \theta_2^{T}U_{n-1,D} \qquad \text{Equation (20)}$$

On poursuit alors en considérant la porteuse à la position E à l'étape 160.

A l'étape 160, l'estimation de canal $\hat{H}_{n-3,E}$ de la porteuse à la position E est égale à l'estimation de canal bruitée

$\tilde{\mathbf{H}}_{\mathbf{n\text{-}3,E}}$. De nouvelles valeurs des filtres d'interpolation $\theta_1$, $\theta_2$ et $\theta_3$ sont déterminées par le procédé décrit précédemment en relation à la figure 6. Le présent procédé peut être poursuivi pour toutes les porteuses du symbole n-3 correspondant à des pilotes continus, des pilotes répartis ou des porteuses utiles à des positions de pilotes répartis. En effet, on retrouve toujours la succession des étapes 152, 154, 156 et 158 et occasionnellement l'étape 160. Lorsque toutes les porteuses du symbole d'indice n-3 ont été considérées, le procédé continue à l'étape 162.

A l'étape 162, le module 16 reçoit le symbole d'indice n+1 et en extrait les pilotes continus et répartis. La détermination des estimations de canal va donc être réalisée pour le symbole d'indice n-2. On poursuit alors en considérant la porteuse à la position A à l'étape 164.

A l'étape 164, on détermine l'estimation de canal $\hat{\mathbf{H}}_{\mathbf{n\text{-}2,A}}$ en utilisant $\theta_2$ selon la relation suivante qui se déduit de l'équation (7) :

$$\hat{H}_{n-2,A} = \theta_2^T U_{n,A} \qquad\qquad \text{Equation (21)}$$

On poursuit alors en considérant la porteuse à la position B à l'étape 166.

A l'étape 166, comme la porteuse à la position B du symbole d'indice n+1 correspond à un pilote réparti, on détermine l'estimation de canal bruitée $\tilde{\mathbf{H}}_{\mathbf{n+1,B}}$ à partir de l'équation (4). La valeur $\tilde{\mathbf{H}}_{\mathbf{n+1,B}}$ est alors mémorisée. En outre, pour le symbole d'indice n-2, on détermine l'estimation de canal $\hat{\mathbf{H}}_{\mathbf{n\text{-}2,B}}$ en utilisant $\theta_3$ selon la relation suivante qui se déduit de l'équation (8) :

$$\hat{H}_{n-2,B} = \theta_3^T U_{n+1,B} \qquad\qquad \text{Equation (22)}$$

On poursuit alors en considérant la porteuse à la position C à l'étape 168.

A l'étape 168, l'estimation de canal $\hat{\mathbf{H}}_{\mathbf{n\text{-}2,C}}$ de la porteuse à la position C est égale à l'estimation de canal bruité $\tilde{\mathbf{H}}_{\mathbf{n\text{-}2,C}}$ qui a été déterminée auparavant. On poursuit alors en considérant la porteuse à la position D à l'étape 170.

A l'étape 170, on détermine l'estimation de canal $\hat{\mathbf{H}}_{\mathbf{n\text{-}2,D}}$ en utilisant $\theta_1$ selon la relation suivante qui se déduit de l'équation (6) :

$$\hat{H}_{n-2,D} = \theta_1^T U_{n\text{-}1,D} \qquad\qquad \text{Equation (23)}$$

On poursuit alors en considérant la porteuse à la position E à l'étape 172.

A l'étape 172, l'estimation de canal $\hat{\mathbf{H}}_{\mathbf{n\text{-}2,E}}$ de la porteuse à la position E est égale à l'estimation de canal bruitée $\tilde{\mathbf{H}}_{\mathbf{n\text{-}2,E}}$. De nouvelles valeurs des filtres d'interpolation $\theta_1$, $\theta_2$ et $\theta_3$ sont déterminées par le procédé décrit précédemment en relation à la figure 6. Le présent procédé peut être poursuivi pour toutes les porteuses du symbole n-2 correspondant à des pilotes continus, des pilotes répartis ou des porteuses utiles à des positions de pilotes répartis. En effet, on retrouve toujours la succession des étapes 164, 166, 168 et 170 et occasionnellement l'étape 172. Lorsque toutes les porteuses du symbole d'indice n-2 ont été considérées, le procédé continue à l'étape 174.

A l'étape 174, le module 16 reçoit le symbole d'indice n+2 et en extrait les pilotes continus et répartis. La détermination des estimations de canal va donc être réalisée pour le symbole d'indice n-1. On poursuit alors en considérant la porteuse à la position A à l'étape 176.

A l'étape 176, on détermine l'estimation de canal $\hat{\mathbf{H}}_{\mathbf{n\text{-}1,A}}$ en utilisant $\theta_1$ selon la relation suivante qui se déduit de l'équation (6) :

$$\hat{H}_{n-1,A} = \theta_1^T U_{n,A} \qquad\qquad \text{Equation (24)}$$

On poursuit alors en considérant la porteuse à la position B à l'étape 178.

A l'étape 178, on détermine l'estimation de canal $\mathbf{H}_{\mathbf{n\text{-}1,B}}$ en utilisant $\theta_2$ selon la relation suivante qui se déduit de l'équation (7) :

$$\hat{H}_{n-1,B} = \theta_2^T U_{n+1,B} \qquad\qquad \text{Equation (25)}$$

On poursuit alors en considérant la porteuse à la position C à l'étape 180.

A l'étape 180, comme la porteuse à la position C du symbole d'indice n+2 correspond à un pilote réparti, on détermine l'estimation de canal bruitée $\tilde{H}_{n+2,C}$ à partir de l'équation (4). La valeur $\tilde{H}_{n+2,C}$ est alors mémorisée. En outre, pour le symbole d'indice n-1, on détermine l'estimation de canal $\hat{H}_{n-1,C}$ en utilisant $\theta_3$ selon la relation suivante qui se déduit de l'équation (8) :

$$\hat{H}_{n-1,C} = \theta_3^T U_{n+2,C} \qquad\qquad \text{Equation (26)}$$

On poursuit alors en considérant la porteuse à la position D à l'étape 182.

A l'étape 182, l'estimation de canal $\hat{H}_{n-1,D}$ de la porteuse à la position D est égale à l'estimation de canal bruité $\tilde{H}_{n-1,D}$ qui a été déterminée auparavant. On poursuit alors en considérant la porteuse à la position E à l'étape 184.

A l'étape 184, l'estimation de canal $\hat{H}_{n-1,E}$ de la porteuse à la position E est égale à l'estimation de canal bruitée $\tilde{H}_{n-1,E}$. De nouvelles valeurs des filtres d'interpolation $\theta_1$, $\theta_2$ et $\theta_3$ sont déterminées par le procédé décrit précédemment en relation à la figure 6. Le présent procédé peut être poursuivi pour toutes les porteuses du symbole n-1 correspondant à des pilotes continus, des pilotes répartis ou des porteuses utiles à des positions de pilotes répartis. En effet, on retrouve toujours la succession des étapes 176, 178, 180 et 182 et occasionnellement l'étape 184. Lorsque toutes les porteuses du symbole d'indice n-1 ont été considérées, le procédé continue à l'étape 186.

A l'étape 186, le module 16 reçoit le symbole d'indice n+3 et en extrait les pilotes continus et répartis. La détermination des estimations de canal va donc être réalisée pour le symbole d'indice n. On poursuit alors en considérant la porteuse à la position A à l'étape 188.

A l'étape 188, l'estimation de canal $\hat{H}_{n,A}$ à la porteuse de position A est égale à l'estimation de canal bruité $\tilde{H}_{n,A}$ qui a été déterminée auparavant. On poursuit alors en considérant la porteuse à la position B à l'étape 190.

A l'étape 190, on détermine l'estimation de canal $\hat{H}_{n,B}$ en utilisant $\theta_1$ selon la relation suivante qui se déduit de l'équation (6) :

$$\hat{H}_{n,B} = \theta_1^T U_{n+1,B} \qquad\qquad \text{Equation (27)}$$

On poursuit alors en considérant la porteuse à la position C à l'étape 192.

A l'étape 192, on détermine l'estimation de canal $\hat{H}_{n,C}$ en utilisant $\theta_2$ selon la relation suivante qui se déduit de l'équation (7) :

$$\hat{H}_{n,C} = \theta_2^T U_{n+2,C} \qquad\qquad \text{Equation (28)}$$

On poursuit alors en considérant la porteuse à la position D à l'étape 194.

A l'étape 194, comme la porteuse à la position D du symbole d'indice n+3 correspond à un pilote réparti, on détermine l'estimation de canal bruitée $\tilde{H}_{n+3,D}$ à partir de l'équation (4). La valeur $\tilde{H}_{n+3,D}$ est alors mémorisée. En outre, pour le symbole d'indice n, on détermine l'estimation de canal $\hat{H}_{n,D}$ en utilisant $\theta_3$ selon la relation suivante qui se déduit de l'équation (8) :

$$\hat{H}_{n,D} = \theta_3^T U_{n+3,D} \qquad\qquad \text{Equation (29)}$$

On poursuit alors en considérant la porteuse à la position E à l'étape 196.

A l'étape 196, l'estimation de canal $\hat{H}_{n,E}$ de la porteuse à la position E est égale à l'estimation de canal bruitée $\tilde{H}_{n,E}$. De nouvelles valeurs des filtres d'interpolation $\theta_1$, $\theta_2$ et $\theta_3$ sont déterminées par le procédé décrit précédemment en relation à la figure 6. Le présent procédé peut être poursuivi pour toutes les porteuses correspondant à des pilotes continus, à des pilotes répartis ou à des porteuses utiles à des positions de pilotes répartis du symbole n. En effet, on retrouve toujours la succession des étapes 188, 190, 192 et 194 et occasionnellement l'étape 196. Lorsque toutes les porteuses du symbole d'indice n ont été considérées, le procédé reprend à l'étape 150 pour le traitement du symbole d'indice n+1 pour lequel la position relative des pilotes répartis est identique à celle du symbole d'indice n-3.

Après la mise en oeuvre du premier exemple de procédé d'interpolation temporelle du canal selon l'invention, on obtient pour un symbole d'indice n les estimations de canal pour toutes les porteuses correspondant à des pilotes continus, des pilotes répartis ou des porteuses utiles à des positions de pilotes répartis, c'est-à-dire une estimation de canal toutes les trois porteuses. Les estimations de canal pour les autres porteuses utiles du symbole d'indice n sont obtenues à l'étape d'interpolation fréquentielle suivante par combinaison linéaire des estimations de canal de porteuses du symbole d'indice n fournies par le procédé d'interpolation temporelle en utilisant un filtre d'interpolation à réponse impulsionnelle finie (ou filtre FIR de l'anglais Finite Impulse Response).

Pour un symbole d'indice n et une porteuse à la position k, k peut être écrit sous la forme k = 3r+j, où r est un entier positif, éventuellement nul, et j est un entier compris entre 0 et 2. La porteuse à la position r correspond à un pilote continu, à un pilote réparti ou à une porteuse utile à une position de pilote réparti. De ce fait, l'estimation de canal de la porteuse à la position r a été fournie par le procédé d'interpolation temporelle. On détermine un vecteur $\mathbf{Z_{n,r}}$ de la façon suivante :

$$
Z_{n,r} = \begin{bmatrix} \hat{H}_{n,\,3r-3(P-1)} \\ \hat{H}_{n,\,3r-3(P-2)} \\ \vdots \\ \hat{H}_{n,\,3r-3} \\ \hat{H}_{n,\,3r} \\ \hat{H}_{n,\,3r+3} \\ \vdots \\ \hat{H}_{n,\,3r+3(P-1)} \\ \hat{H}_{n,\,3r+3P} \end{bmatrix}
\qquad\qquad \text{Equation (30)}
$$

où P est un entier qui dans le présent exemple de réalisation est pris égal à 6. On appelle $\hat{H}_{n,k}$ l'estimation de canal de la porteuse du symbole d'indice n à la position k fournie à l'étape d'interpolation fréquentielle pour la différencier d'une estimation de canal fournie par le procédé d'estimation temporelle. L'estimation de canal $\hat{H}_{n,k}$ est obtenue selon la relation suivante :

$$
\hat{H}_{n,k} = \Phi_i^T Z_{n,r}
\qquad\qquad \text{Equation (31)}'
$$

où $\Phi_i$, i étant compris entre 0 et 2, est un vecteur à coefficients complexes de dimension 2P qui représente la réponse impulsionnelle du filtre utilisé pour réaliser l'interpolation en fréquence. Il s'agit, par exemple, d'un filtre de Wiener. Les filtres d'interpolation fréquentielle $\Phi_i$, i étant compris entre 0 et 2, sont déterminés en fonction du type de démodulation COFDM mise en oeuvre (par exemple, du type 2K, 4K, 8K) et de la durée de la réponse impulsionnelle choisie (par exemple, 5 μs, 20 μs ou 40 μs). Pour k inférieur à 3P-3, les estimations de canal utilisées pour la détermination de $\mathbf{Z_{n,r}}$, pour lesquelles la position en fréquence seraient inférieures à 0, sont remplacées par $\hat{H}_{n,0}$. De façon analogue, Pour k supérieur à N-1-3P, les estimations de canal utilisées pour la détermination de $\mathbf{Z_{n,r}}$, pour lesquelles la position en fréquence seraient supérieures à N-1, sont remplacées par $\hat{H}_{n,N-1}$.

A la fin de l'étape d'interpolation fréquentielle, on dispose d'une estimation de canal pour chaque porteuse du symbole d'indice n. On notera que, pendant l'étape d'interpolation fréquentielle, les estimations de canal des porteuses utiles à des positions de pilotes répartis, qui avaient été précédemment fournies par le procédé d'interpolation temporelle, peuvent être à nouveau déterminées à l'étape d'interpolation fréquentielle.

Selon un second exemple de procédé d'interpolation temporelle, on utilise pour la détermination de l'estimation de canal d'une porteuse utile à une position de pilote réparti non seulement des estimations de canal bruitées futures et passées mais également des estimations de canal de porteuses utiles passées fournies à des étapes d'interpolation fréquentielle précédentes. Ceci permet d'améliorer la précision des estimations de canal fournies par le procédé d'interpolation temporelle et donc les performances de la démodulation COFDM. A titre d'exemple, en plus des cinq estimations de canal bruitées passées et d'une estimation de canal bruitée future utilisées par le premier exemple de procédé d'interpolation temporelle, le second exemple de procédé d'interpolation temporelle utilise les deux estimations de canal de porteuses utiles qui précèdent le symbole considéré. Par rapport au premier exemple de procédé d'interpolation temporelle, les filtres d'interpolation $\theta_1$, $\theta_2$ et $\theta_3$ sont, dans le second exemple de procédé, sont des vecteurs de dimension 8.

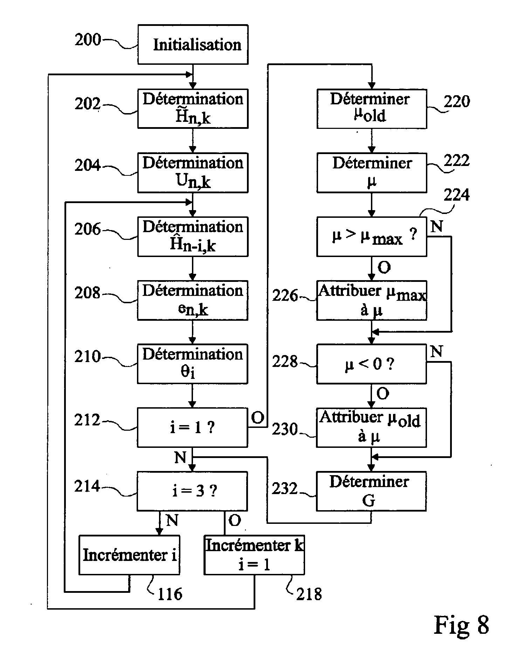

La figure 8 illustre les étapes mises en oeuvre par le second exemple de procédé d'interpolation temporelle pour la détermination des filtres d'interpolation $\theta_i(p)$, i étant compris entre 1 et 3. De telles étapes ne sont mises en oeuvre que lorsque la porteuse traitée par le module 16 correspond à un pilote continu. Seules les différences par rapport aux étapes décrites précédemment pour le premier exemple de procédé d'interpolation temporelle et illustrées à la figure 6 vont être décrites.

A l'étape 200, par rapport à l'étape 100, les filtres d'interpolation $\theta_i(0)$, pour i compris entre 1 et 3, sont initialisés de la façon suivante:

$$\theta_i(0) = (1/8, \ldots, 1/8)^T \qquad\qquad \text{Equation (32)}$$

En outre, le vecteur G est, dans le second exemple de procédé d'interpolation temporelle, un vecteur de dimension 8 initialisé de la façon suivante:

$$G(0) = (0, \ldots, 0)^T \qquad\qquad \text{Equation (33)}$$

L'étape 202 est identique à l'étape 102.

A l'étape 204, par rapport à l'étape 104, au lieu du vecteur $\mathbf{U_{n,k}}$, on utilise le vecteur $\mathbf{U_{n,k,i}}$ qui est déterminé selon la relation suivante :

$$U_{n,k,i} = \begin{bmatrix} \tilde{H}_{n-4M,k} \\ \tilde{H}_{n-4(M-1),k} \\ \vdots \\ \tilde{H}_{n-8,k} \\ \tilde{H}_{n-3-i,k} \\ \vdots \\ \hat{H}_{n-1-i,k} \\ \tilde{H}_{n,k} \end{bmatrix} \qquad\qquad \text{Equation (34)}$$

Les étapes 206 à 232 sont identiques aux étapes 106 à 132 du premier exemple de procédé d'interpolation temporelle.

A la différence du premier exemple de procédé d'interpolation temporelle, dans le second exemple de procédé d'interpolation temporelle, après l'étape 216, le procédé se poursuit à l'étape 204. En effet, un nouveau vecteur $\mathbf{U_{n,k,i}}$ doit être déterminé lorsque l'indice i est incrémenté.

Le second exemple de procédé d'interpolation temporelle comporte par ailleurs les mêmes étapes que le premier exemple de procédé d'interpolation temporelle décrit précédemment en relation avec la figure 7. Toutefois, à la place des équations (6), (7) et (8), on utilise respectivement les équations suivantes :

$$\hat{H}_{n-1,k} = \theta_1^T V_{n,k} \qquad\qquad \text{Equation (35)}$$

$$\hat{H}_{n-2,k} = \theta_2^T V'_{n,k} \qquad\qquad \text{Equation (36)}$$

$$\hat{H}_{n-3,k} = \theta_3^T V''_{n,k} \qquad\qquad \text{Equation (37)}$$

où $V_{n,k}$ , $V'_{n,k}$ et $V''_{n,k}$ sont des vecteurs de dimensions 8 définis de la façon suivante :

$$V_{n,k} = \begin{bmatrix} \tilde{H}_{n-20,k} \\ \tilde{H}_{n-16,k} \\ \tilde{H}_{n-12,k} \\ \tilde{H}_{n-8,k} \\ \tilde{H}_{n-4,k} \\ \hat{H}_{n-3,k} \\ \hat{H}_{n-2,k} \\ \tilde{H}_{n,k} \end{bmatrix} \quad V'_{n,k} = \begin{bmatrix} \tilde{H}_{n-20,k} \\ \tilde{H}_{n-16,k} \\ \tilde{H}_{n-12,k} \\ \tilde{H}_{n-8,k} \\ \hat{H}_{n-5,k} \\ \tilde{H}_{n-4,k} \\ \hat{H}_{n-3,k} \\ \tilde{H}_{n,k} \end{bmatrix} \quad V''_{n,k} = \begin{bmatrix} \tilde{H}_{n-20,k} \\ \tilde{H}_{n-16,k} \\ \tilde{H}_{n-12,k} \\ \tilde{H}_{n-8,k} \\ \hat{H}_{n-6,k} \\ \hat{H}_{n-5,k} \\ \tilde{H}_{n-4,k} \\ \tilde{H}_{n,k} \end{bmatrix} \quad \text{Equations (38)}$$

Les vecteurs $V_{n,k}$ , $V'_{n,k}$ et $V''_{n,k}$ comportent donc chacun deux composantes correspondant à des estimations de canal fournies à des étapes d'interpolation fréquentielle précédentes.

Les équations (17) à (28) utilisées pour le premier exemple de procédé d'interpolation temporelle selon l'invention sont respectivement donc remplacées par les équations suivantes :

$$\hat{H}_{n-3,A} = \theta_3^T V''_{n,A} \qquad\qquad \text{Equation (39)}$$

$$\hat{H}_{n-3,C} = \theta_1^T V_{n-2,C} \qquad\qquad \text{Equation (40)}$$

$$\hat{H}_{n-3,D} = \theta_2^T V'_{n-1,D} \qquad\qquad \text{Equation (41)}$$

$$\hat{H}_{n-2,A} = \theta_2^T V'_{n,A} \qquad\qquad \text{Equation (42)}$$

$$\hat{H}_{n-2,B} = \theta_3^T V''_{n+1,B} \qquad\qquad \text{Equation (43)}$$

$$\hat{H}_{n-2,D} = \theta_1^T V_{n-1,D} \qquad\qquad \text{Equation (44)}$$

$$\hat{H}_{n-1,A} = \theta_1^T V_{n,A} \qquad\qquad \text{Equation (45)}$$

$$\hat{H}_{n-1,B} = \theta_2^T V'_{n+1,B} \qquad\qquad \text{Equation (46)}$$

$$\hat{H}_{n-1,C} = \theta_3^T V''_{n+2,C} \qquad\qquad \text{Equation (47)}$$

$$\hat{H}_{n,B} = \theta_1^T V_{n+1,B} \qquad\qquad \text{Equation (48)}$$

$$\hat{H}_{n,C} = \theta_2^T V'_{n+2,C} \qquad\qquad \text{Equation (49)}$$

$$\hat{H}_{n,D} = \theta_3^T \tilde{V}''_{n+3,D} \qquad\qquad \text{Equation (50)}$$

Bien entendu, la présente invention est susceptible de diverses variantes et modifications qui apparaîtront à l'homme de l'art. En particulier, la présente invention a été décrite pour une démodulation COFDM pour laquelle les pilotes répartis sont disposés toutes les 12 porteuses et décalés de 3 porteuses d'un symbole au symbole suivant de sorte que tous les 4 symboles, on retrouve la même disposition des symboles répartis. Il est clair que la disposition des pilotes répartis peut être différente. En particulier, le décalage des pilotes répartis d'un symbole à l'autre peut être différent. Le nombre de filtres d'interpolation, $\theta_i$, à utiliser par le procédé d'interpolation temporelle est alors adapté en conséquence.

## Revendications

1. Procédé de démodulation COFDM de symboles successifs d'un signal reçu depuis un canal de transmission, chaque symbole comportant des premières porteuses modulées en phase et/ou en amplitude véhiculant des données qui dépendent du symbole et des secondes porteuses de référence (Pr, Pc) dites pilotes dont les positions en fréquence (A, B, C, D, E) varient au moins en partie d'un symbole au symbole suivant, au moins une porteuse donnée des secondes porteuses correspondant, pour chaque symbole, au même pilote, le procédé comprenant, pour chaque symbole, une étape de détermination d'une première estimation ($\hat{H}_{n-1,A}$, $\hat{H}_{n-2,A}$, $\hat{H}_{n-3,A}$) de la fonction de transfert du canal pour chaque porteuse d'un ensemble de porteuses parmi les premières porteuses dudit symbole telles que, pour les positions en fréquence des porteuses considérées, des symboles différents dudit symbole comprennent des pilotes, correspondant à une combinaison linéaire de secondes estimations ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) de la fonction de transfert du canal déterminées pour des pilotes à la fréquence de ladite porteuse, **caractérisé en ce que** les coefficients de la combinaison linéaire sont déterminés de façon itérative, une nouvelle valeur d'au moins un des coefficients étant égale à la somme de la dernière valeur déterminée dudit coefficient et d'un terme comprenant le produit entre un pas d'itération et un terme d'erreur égal à la différence entre la deuxième estimation déterminée pour ladite porteuse donnée d'un symbole qui dépend du coefficient et la première estimation déterminée pour ladite porteuse donnée dudit symbole, le pas d'itération étant déterminé de façon itérative.

2. Procédé selon la revendication 1, dans lequel chaque seconde estimation ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) déterminée pour une porteuse d'un symbole est égale au rapport entre un coefficient reçu associé à la porteuse et un coefficient théorique prédéterminé associé à la porteuse.

3. Procédé selon la revendication 1, dans lequel la première estimation ($\hat{H}_{n-1,A}$, $\hat{H}_{n-2,A}$, $\hat{H}_{n-3,A}$) est déterminée à partir d'au moins la seconde estimation ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) déterminée pour un pilote à la même fréquence que ladite porteuse d'un symbole reçu après ledit symbole.

4. Procédé selon la revendication 2, dans lequel la nouvelle valeur du coefficient est égale à la somme de la dernière valeur déterminée dudit coefficient et d'un terme égal au produit du pas d'itération, du terme d'erreur et du conjugué de la seconde estimation déterminée pour la porteuse donnée d'un symbole qui dépend du coefficient.

**5.** Procédé selon la revendication 4, comprenant les étapes suivantes, pour au moins la porteuse donnée de chaque symbole :

déterminer un vecteur dont au moins certaines composantes correspondent à des secondes estimations ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) déterminées pour la porteuse donnée de symboles reçus avant ledit symbole ; et
déterminer une nouvelle valeur du pas d'itération égale à la somme de la dernière valeur du pas d'itération déterminée et d'un terme égal au produit d'un terme constant et de la partie réelle du produit de la transposée du vecteur, d'une matrice de pondération et du conjugué du terme d'erreur.

**6.** Démodulateur COFDM destiné à recevoir des symboles successifs d'un signal reçu depuis un canal de transmission, chaque symbole comportant des premières porteuses modulées en phase et/ou en amplitude véhiculant des données qui dépendent du symbole et des secondes porteuses de référence (Pr, Pc) dites pilotes dont les positions en fréquence (A, B, C, D, E) varient au moins en partie d'un symbole au symbole suivant, au moins une porteuse donnée des secondes porteuses correspondant, pour chaque symbole, au même pilote, le démodulateur comprenant un circuit de détermination, pour chaque symbole, d'une première estimation ($\hat{H}_{n-1,A}$, $\hat{H}_{n-2,A}$, $\hat{H}_{n-3,A}$) de la fonction de transfert du canal pour chaque porteuse d'un ensemble de porteuses parmi les premières porteuses dudit symbole telles que, pour les positions en fréquence des porteuses considérées, des symboles différents dudit symbole comprennent des pilotes, correspondant à une combinaison linéaire de secondes estimations ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) de la fonction de transfert du canal déterminées pour des pilotes à la fréquence de ladite porteuse, **caractérisé en ce qu'**il comprend un circuit de détermination des coefficients de la combinaison linéaire de façon itérative, une nouvelle valeur d'au moins un des coefficients étant égale à la somme de la dernière valeur déterminée dudit coefficient et d'un terme comprenant le produit entre un pas d'itération et un terme d'erreur égal à la différence entre la deuxième estimation déterminée pour ladite porteuse donnée d'un symbole qui dépend du coefficient et la première estimation déterminée pour ladite porteuse donnée dudit symbole, le démodulateur comprenant en outre un circuit de détermination du pas d'itération de façon itérative.

**7.** Démodulateur selon la revendication 6, comprenant un circuit adapté à fournir chaque seconde estimation ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) pour une porteuse d'un symbole comme étant égale au rapport entre un coefficient reçu associé à la porteuse et un coefficient théorique prédéterminé associé à la porteuse.

**8.** Démodulateur selon la revendication 6, dans lequel le circuit de détermination des coefficients de la combinaison linéaire est adapté à fournir la nouvelle valeur du coefficient comme étant égale à la somme de la dernière valeur déterminée dudit coefficient et d'un terme égal au produit du pas d'itération, du terme d'erreur et du conjugué de la seconde estimation déterminée pour la porteuse donnée d'un symbole qui dépend du coefficient.

**9.** Démodulateur selon la revendication 6, dans lequel le circuit de détermination du pas d'itération comprend :

un circuit adapté, pour au moins la porteuse donnée de chaque symbole, à déterminer un vecteur dont au moins certaines composantes correspondent à des secondes estimations ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) déterminées pour la porteuse donnée de symboles reçus avant ledit symbole ; et
un circuit adapté à déterminer une nouvelle valeur du pas d'itération égale à la somme de la dernière valeur du pas d'itération déterminée et d'un terme égal au produit d'un terme constant et de la partie réelle du produit de la transposée du vecteur, d'une matrice de pondération et du conjugué du terme d'erreur.

**10.** Démodulateur selon la revendication 9, dans lequel le circuit de détermination du pas d'itération comprend un circuit adapté à déterminer une nouvelle valeur de la matrice de pondération égale à la somme de la dernière valeur de la matrice de pondération déterminée, d'un premier terme égal au produit du terme d'erreur et du conjugué du vecteur et d'un second terme égal au produit de l'opposée du pas d'itération, du conjugué du vecteur, de la transposée du vecteur et de la dernière valeur de la matrice de pondération déterminée.

**Claims**

**1.** A method of COFDM demodulation of successive symbols of a signal received from a transmission channel, each symbol comprising first carriers modulated in phase and/or in amplitude conveying data which depend on the symbol and second reference carriers (Pr, Pc) called pilots having their frequency positions (A, B, C, D, E) varying at least partly from one symbol to the next symbol, at least one given carrier from among the second carriers corresponding, for each symbol, to the same pilot, the method comprising, for each symbol, a step of determining a first estimate $(\hat{H}_{n-1,A}, \hat{H}_{n-2,A}, \hat{H}_{n-3,A})$ of the transfer function of the channel for each carrier in a first set of carriers from among the first carriers of said symbol such that, for the frequency positions of the considered carriers, symbols different from said symbol comprise pilots, corresponding to a linear combination of second estimates $(\tilde{H}_{n-24,A}, \tilde{H}_{n-20,A}, \tilde{H}_{n-16,A}, \tilde{H}_{n-12,A}, \tilde{H}_{n-8,A}, \tilde{H}_{n-4,A}, \tilde{H}_{n,A})$ of the transfer function of the channel determined for pilots at the frequency of said carrier, wherein the coefficients of the linear combination are determined in iterative fashion, a new value of at least one of the coefficients being equal to the sum of the last determined value of said coefficient and of a term comprising the product between an iteration step and an error term equal to the different between the second estimate determined for said given carrier of a symbol, which depends on the coefficient, and the first estimate determined for said given carrier of said symbol, the iteration step being determined in iterative fashion.

2. The method of claim 1, wherein each second estimate $(\tilde{H}_{n-24,A}, \tilde{H}_{n-20,A}, \tilde{H}_{n-16,A}, \tilde{H}_{n-12,A}, \tilde{H}_{n-8,A}, \tilde{H}_{n-4,A}, \tilde{H}_{n,A})$ determined for a symbol carrier is equal to the ratio between a received coefficient associated with the carrier and a predetermined theoretical coefficient associated with the carrier.

3. The method of claim 1, wherein the first estimate $(\hat{H}_{n-1,A}, \hat{H}_{n-2,A}, \hat{H}_{n-3,A})$ is determined based on at least the second estimate $(\tilde{H}_{n-24,A}, \tilde{H}_{n-20,A}, \tilde{H}_{n-16,A}, \tilde{H}_{n-12,A}, \tilde{H}_{n-8,A}, \tilde{H}_{n-4,A}, \tilde{H}_{n,A})$ determined for a pilot at the same frequency as said carrier of a symbol received after said symbol.

4. The method of claim 2, wherein the new value of the coefficient is equal to the sum of the last determined value of said coefficient and of a term equal to the product of the iteration step, of the error term, and of the conjugate of the second estimate determined for the given carrier of a symbol which depends on the coefficient.

5. The method of claim 4, comprising the steps, for at least the given carrier of each symbol, of:

   determining a vector having at least some components corresponding to second estimates $(\tilde{H}_{n-24,A}, \tilde{H}_{n-20,A}, \tilde{H}_{n-16,A}, \tilde{H}_{n-12,A}, \tilde{H}_{n-8,A}, \tilde{H}_{n-4,A}, \tilde{H}_{n,A})$ determined for the given carrier of symbols received before said symbol; and
   determining a new value of the iteration step equal to the sum of the last determined value of the iteration step and of a term equal to the product of a constant term and of the real part of the product of the transpose of the vector, of a weighting array, and of the conjugate of the error term.

6. A COFDM demodulator intended to receive successive symbols of a signal received from a transmission channel, each symbol comprising first carriers modulated in phase and/or in amplitude conveying data which depend on the symbol and second reference carriers (Pr, Pc) called pilots, having their frequency positions (A, B, C, D, E) varying at least partly from one symbol to the next symbol, at least one given carrier from among the second carriers corresponding, for each symbol, to the same pilot, the demodulator comprising a circuit for determining, for each symbol, a first estimate $(\hat{H}_{n-1,A}, \hat{H}_{n-2,A}, \hat{H}_{n-3,A})$ of the transfer function of the channel for each carrier in a first set of carriers from among the first carriers of said symbol such that, for the frequency positions of the considered carriers, symbols different from said symbol comprise pilots, corresponding to a linear combination of second estimates $(\tilde{H}_{n-24,A}, \tilde{H}_{n-20,A}, \tilde{H}_{n-16,A}, \tilde{H}_{n-12,A}, \tilde{H}_{n-8,A}, \tilde{H}_{n-4,A}, \tilde{H}_{n,A})$ of the transfer function of the channel determined for pilots at the frequency of said carrier, comprising a circuit for determining in iterative fashion coefficients of the linear combination, a new value of at least one of the coefficients being equal to the sum of the last determined value of said coefficient and of a term comprising the product between an iteration step and an error term equal to the different between the second estimate determined for said given carrier of a symbol which depends on the coefficient and the first estimate determined for said given carrier of said symbol, the demodulator further comprising a circuit for determining in iterative fashion the iteration step.

7. The demodulator of claim 6, comprising a circuit capable of providing each second estimate $(\tilde{H}_{n-24,A}, \tilde{H}_{n-20,A}, \tilde{H}_{n-16,A}, \tilde{H}_{n-12,A}, \tilde{H}_{n-8,A}, \tilde{H}_{n-4,A}, \tilde{H}_{n,A})$ for a carrier of a symbol as being equal to the ratio between a received coefficient associated with the carrier and a predetermined theoretical coefficient associated with the carrier.

8. The demodulator of claim 6, wherein the circuit for determining the coefficients of the linear combination is capable of providing the new value of the coefficient as being equal to the sum of the last determined value of said coefficient and of a term equal to the product of the iteration step, of the error term, and of the conjugate of the second estimate determined for the given carrier of a symbol which depends on the coefficient.

9. The demodulator of claim 6, wherein the circuit for determining the iteration step comprises:

 a circuit capable, for at least the given carrier of each symbol, of determining a vector having at least some components corresponding to second estimates ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) determined for the given carrier of symbols received before said symbol; and
 a circuit capable of determining a new value of the iteration step equal to the sum of the last determined value of the iteration step and of a term equal to the product of a constant term and of the real part of the product of the transpose of the vector, of a weighting array, and of the conjugate of the error term.

10. The demodulator of claim 9, wherein the circuit for determining the iteration step comprises a circuit capable of determining a new value of the weighting array equal to the sum of the last determined value of the weighting array, of a first term equal to the product of the error term, and of the conjugate of the vector and of a second term equal to the product of the opposite of the iteration step, of the conjugate of the vector, of the transpose of the vector, and of the last determined value of the weighting array.

**Patentansprüche**

1. Ein Verfahren der COFDM Demodulation von aufeinanderfolgenden Symbolen von einem, von einem Übertragungskanal empfangenen Signal, wobei jedes Symbol erste Träger aufweist, die in Phase und/oder in Amplitude moduliert sind und Daten befördern, die abhängen von dem Symbol und zweite Referenzträger (Pr, Pc) aufweist, die Piloten genannten werden, deren Frequenzpositionen (A, B, C, D, E) wenigstens teilweise von einem Symbol zu dem nächsten Symbol variieren, wobei wenigstens ein bestimmter Träger von den zweiten Trägern für jedes Symbol dem gleichen Pilot entspricht, wobei das Verfahren Folgendes aufweist:

 für jedes Symbol einen Schritt des Bestimmens einer ersten Schätzung ($\hat{H}_{n-1,A}$, $\hat{H}_{n-2,A}$, $\hat{H}_{n-3,A}$) von der Transferfunktion von dem Kanal für jeden Träger in einem ersten Satz von Trägern aus den ersten Trägern von dem Symbol derart, dass für die Frequenzpositionen von den betrachteten Trägern Symbole, die von dem Symbol unterschiedlich sind Piloten aufweisen, entsprechend einer linearen Kombination von zweiten Schätzungen ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) von der Transferfunktion von dem Kanal und zwar bestimmt für Piloten an der Frequenz von dem Träger, wobei die Koeffizienten von der linearen Kombination auf eine iterative Art und Weise bestimmt werden, wobei ein neuer Wert von wenigstens einem von den Koeffizienten gleich der Summe von dem zuletzt bestimmten Wert von dem Koeffizienten und einem Ausdruck ist, der das Produkt aufweist zwischen einem Iterationsschritt und einem Fehlerausdruck, der gleich ist der Differenz zwischen der zweiten Schätzung, bestimmt für den bestimmten bzw. gegebenen Träger von einem Symbol, welches von dem Koeffizienten abhängt und der ersten Schätzung, bestimmt für den bestimmten Träger von dem Symbol, wobei der Iterationsschritt auf eine iterative Art und Weise bestimmt wird.

2. Verfahren nach Anspruch 1, wobei jede zweite Schätzung ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$), die für einen Symbolträger bestimmt wird, gleich dem Verhältnis ist zwischen einem empfangenen Koeffizienten, der mit dem Träger assoziiert ist, und einem vorherbestimmten theoretischen Koeffizienten, der mit dem Träger assoziiert ist.

3. Verfahren nach Anspruch 1, wobei die erste Schätzung ($\hat{H}_{n-1,A}$, $\hat{H}_{n-2,A}$, $\hat{H}_{n-3,A}$), bestimmt wird basierend auf wenigstens der zweiten Schätzung, ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) die bestimmt wird für einen Piloten an der gleichen Frequenz wie der Träger von einem Symbol das nach dem Symbol empfangen wird.

4. Verfahren nach Anspruch 2, wobei der neue Wert von dem Koeffizienten gleich ist der Summe von dem zuletzt bestimmten Wert von dem Koeffizienten und von einem Ausdruck der gleich ist dem Produkt von dem Iterationsschritt, von dem Fehlerausdruck und von dem Konjugierten von der zweiten Schätzung, bestimmt für den bestimmten Träger von einem Symbol, welches von dem Koeffizienten abhängt.

5. Verfahren nach Anspruch 4, das für wenigstens den bestimmten Träger von jedem Symbol, die folgenden Schritte aufweist:

 Bestimmen eines Vektors, der wenigstens einige Komponenten entsprechend den zweiten Schätzungen ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) besitzt und zwar bestimmt für den bestimmten Träger von Symbolen, die vor dem Symbol empfangen werden; und

Bestimmen eines neuen Wertes von dem Iterationsschritt, der gleich ist der Summe von dem zuletzt bestimmten Wert von dem Iterationsschritt und von einem Ausdruck, der gleich ist dem Produkt von einem konstanten Ausdruck und von dem Realteil von dem Produkt von dem transponierten von dem Vektor, von einem Gewichtungs-Array und von dem konjugierten von dem Fehlerausdruck.

6. Ein COFDM Demodulator, der gedacht ist zum Empfangen aufeinanderfolgender Symbole von einem Signal, das von einem Übertragungskanal empfangen wird, wobei jedes Symbol erste Träger aufweist, die in Phase und/oder in Amplitude moduliert sind, die Daten befördern, welche abhängen von dem Symbol und zweite Referenzträger (Pr, Pc) aufweist, die Piloten genannt werden, die ihre Frequenzpositionen (A, B, C, D, E) besitzen, die wenigstens teilweise von einem Symbol zu dem nächsten Symbol variieren und wenigstens ein bestimmter bzw. gegebener Träger von den zweiten Trägern für jedes Symbol dem gleichen Pilot entspricht, wobei der Demodulator eine Schaltung aufweist zum Bestimmen für jedes Symbol, einer ersten Schätzung ($\hat{H}_{n-1,A}$, $\hat{H}_{n-2,A}$, $\hat{H}_{n-3,A}$) von der Transferfunktion von dem Kanal für jeden Träger in einem ersten Satz von Trägern von den ersten Trägern von jedem Symbol, derart, dass für die Frequenzpositionen von den betrachteten Trägern, Symbole, die von dem Symbol verschieden sind, Piloten aufweisen, entsprechend einer linearen Kombination von zweiten Schätzungen ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) von der Transferfunktion von dem Kanal, bestimmt für Piloten bei der Frequenz von dem Träger, eine Schaltung aufweisend, zum Bestimmen auf eine iterative Art und Weise von Koeffizienten von der linearen Kombination, eines neuen Wertes von wenigstens einem von den Koeffizienten der gleich der Summe von dem zuletzt bestimmten Wert von dem Koeffizienten und von einem Ausdruck ist, der das Produkt zwischen einem Iterationsschritt und einem Fehlerausdruck aufweist, der gleich ist der Differenz zwischen der zweiten Schätzung, die bestimmt wird für den bestimmten Träger von einem Symbol, welches abhängt von dem Koeffizienten und der ersten Schätzung, die bestimmt wird für den bestimmten Träger von dem Symbol, wobei der Demodulator ferner eine Schaltung aufweist zum Bestimmen auf eine iterative Art und Weise des Iterationsschritts.

7. Demodulator nach Anspruch 6, der eine Schaltung aufweist, die geeignet ist zum Vorsehen jeder zweiten Schätzung ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) für einen Träger von einem Symbol als gleich dem Verhältnis zwischen einem empfangenen Koeffizienten, der mit dem Träger assoziiert ist und einem vorherbestimmten theoretischen Koeffizienten, der mit dem Träger assoziiert ist.

8. Demodulator nach Anspruch 6, wobei die Schaltung zum Bestimmen der Koeffizienten von der linearen Kombination geeignet ist zum Vorsehen des neuen Wertes von dem Koeffizienten als gleich der Summe von dem zuletzt bestimmten Wert von dem Koeffizienten und von einem Ausdruck der gleich ist dem Produkt von dem Iterationsschritt, von dem Fehlerausdruck und von dem konjugierten von der zweiten Schätzung, bestimmt für den bestimmten Träger von einem Symbol, welches von dem Koeffizienten abhängt.

9. Demodulator nach Anspruch 6, wobei die Schaltung zum Bestimmen des Iterationsschritts Folgendes aufweist:

eine Schaltung, die geeignet ist für wenigstens den bestimmten Träger von jedem Symbol, zum Bestimmen eines Vektors, der wenigstens einige Komponenten besitzt, die den zweiten Schätzungen ($\tilde{H}_{n-24,A}$, $\tilde{H}_{n-20,A}$, $\tilde{H}_{n-16,A}$, $\tilde{H}_{n-12,A}$, $\tilde{H}_{n-8,A}$, $\tilde{H}_{n-4,A}$, $\tilde{H}_{n,A}$) entsprechen, die bestimmt sind für den bestimmten Träger von Symbolen, die vor dem Symbol empfangen worden sind; und
eine Schaltung, die geeignet ist zum Bestimmen eines neuen Werts von dem Iterationsschritt, gleich der Summe von dem zuletzt bestimmten Wert von dem Iterationsschritt und von einem Ausdruck, der gleich ist dem Produkt von einem konstanten Ausdruck und von dem Realteil von dem Produkt von dem transponierten von dem Vektor, von einem Gewichtungs-Array und von dem konjugierten von dem Fehlerausdruck.

10. Demodulator nach Anspruch 9, wobei die Schaltung zum Bestimmen des Iterationsschritts eine Schaltung aufweist, die geeignet ist zum Bestimmen eines neuen Wertes von dem Gewichtungsarray, der gleich ist der Summe von dem zuletzt bestimmten Wert von dem Gewichtungs-Array, von einem ersten Ausdruck, der gleich ist dem Produkt von dem Fehlerausdruck und von dem konjugierten von dem Vektor und von einem zweiten Ausdruck, der gleich dem Produkt ist von dem entgegengesetzten von dem Iterationsschritt, von dem konjugierten von dem Vektor, von dem transformierten von dem Vektor und von dem zuletzt bestimmten Wert von dem Gewichtungs-Array.

Fig 1

Fig 2

Fig 3

Fig 4

Fig 5

EP 1 826 974 B1

## Fig 6

- 100 — Initialisation
- 102 — Détermination $\tilde{H}_{n,k}$
- 104 — Détermination $U_{n,k}$
- 106 — Détermination $\hat{H}_{n-i,k}$
- 108 — Détermination $e_{n,k}$
- 110 — Détermination $\theta_i$
- 112 — $i = 1$ ? → O
- 114 — $i = 3$ ? → N
- 116 — Incrémenter $i$
- 118 — Attente pilote continu
- 120 — Déterminer $\mu_{old}$
- 122 — Déterminer $\mu$
- 124 — $\mu > \mu_{max}$ ? → N
- 126 — Attribuer $\mu_{max}$ à $\mu$
- 128 — $\mu < 0$ ? → N
- 130 — Attribuer $\mu_{old}$ à $\mu$
- 132 — Déterminer $G$

## Fig 7

| | Réception symbole n (150) | Réception symbole n+1 (162) | Réception symbole n+2 (174) | Réception symbole n+3 (186) |
|---|---|---|---|---|
| Porteuse A | Détermination de $\tilde{H}_{n,A}$ / Détermination de $\hat{H}_{n-3,A}$ avec $\theta_3$ (152) | Détermination de $\hat{H}_{n-2,A}$ avec $\theta_2$ (164) | Détermination de $\hat{H}_{n-1,A}$ avec $\theta_1$ (176) | $\hat{H}_{n,A} = \tilde{H}_{n,A}$ (188) |
| Porteuse B | $\hat{H}_{n-3,B} = \tilde{H}_{n-3,B}$ (154) | Détermination de $\tilde{H}_{n+1,B}$ / Détermination de $\hat{H}_{n-2,B}$ avec $\theta_3$ (166) | Détermination de $\hat{H}_{n-1,B}$ avec $\theta_2$ (178) | Détermination de $\hat{H}_{n,B}$ avec $\theta_1$ (190) |
| Porteuse C | Détermination de $\hat{H}_{n-3,C}$ avec $\theta_1$ (156) | $\hat{H}_{n-2,C} = \tilde{H}_{n-2,C}$ (168) | Détermination de $\tilde{H}_{n+2,C}$ / Détermination de $\hat{H}_{n-1,C}$ avec $\theta_3$ (180) | Détermination de $\hat{H}_{n,C}$ avec $\theta_2$ (192) |
| Porteuse D | Détermination de $\hat{H}_{n-3,D}$ avec $\theta_2$ (158) | Détermination de $\hat{H}_{n-2,D}$ avec $\theta_1$ (170) | $\hat{H}_{n-1,D} = \tilde{H}_{n-1,D}$ (182) | Détermination de $\tilde{H}_{n+3,D}$ / Détermination de $\hat{H}_{n,D}$ avec $\theta_3$ (194) |
| Porteuse E | $\hat{H}_{n-3,E} = \tilde{H}_{n-3,E}$ / Détermination de $\theta_i$ (160) | $\hat{H}_{n-2,E} = \tilde{H}_{n-2,E}$ / Détermination de $\theta_i$ (172) | $\hat{H}_{n,E} = \tilde{H}_{n,E}$ / Détermination de $\theta_i$ (184) | $\hat{H}_{n,E} = \tilde{H}_{n,E}$ / Détermination de $\theta_i$ (196) |

Fig 8